# FASCICULE DE BREVET EUROPEEN

(11) **EP 1 263 290 B1**
(45) Date de publication et mention de la délivrance du brevet: **02.11.2005**
(21) Numéro de dépôt: 01913991.4
(22) Date de dépôt: 13.03.2001
(51) Int. Cl.: A21D 8/04, A21D 10/02, A21D 6/00, A21D 8/02

(54) **COMBINAISON D'UNE PATE ET D'UN EMBALLAGE ET SON PROCEDE DE PREPARATION**
TEIG UND PACKUNG-KOMBINATION UND VERFAHREN ZUR HERSTELLUNG
DOUGH AND CONTAINER COMBINATION AND METHOD FOR MAKING SAME

(30) Priorité: 13.03.2000 FR 0003168
(43) Date de publication de la demande: 11.12.2002
(73) Titulaire: EURODOUGH, 62800 Lievin (FR)
(72) Inventeur: HERBEZ, Philippe, F-62221 Noyelles-sous-Lens (FR); PALAVIT, Pascal, F-62160 Bully-les-Mines (FR); DROUET, Philippe, F-75019 Paris (FR)
(74) Mandataire: Ahner, Francis
(86) Numéro de dépôt international: PCT/FR2001/000738
(87) Numéro de publication internationale: WO 2001/067872

(56) Documents cités:
- EP-A- 0 561 487
- EP-A- 0 672 349
- US-A- 5 571 544
- US-A- 5 858 440

## Description

La présente invention concerne la combinaison d'une pâte et d'un système fermé d'emballage de préférence sous la forme d'une boîte, ainsi que son procédé de fabrication.

Le domaine de la présente invention est celui des pâtes prêtes à l'emploi destinées à être vendues en tant que « produits frais », qui sont conservées en zones réfrigérées.

L'étude de l'art antérieur a permis de mettre en évidence l'existence de quelques documents qui concernent de telles pâtes et notamment des pâtes conditionnées dans des boîtes.

Le brevet US 5 084 284 décrit en particulier l'utilisation d'une boîte de forme tubulaire pour conditionner une pâte à base de levure chimique, cette boîte présentant l'avantage d'être suffisamment solide pour ne pas être endommagée lors de sa mise sous vide. Ce brevet décrit par ailleurs une méthode de travail d'une pâte comprenant notamment une étape de mise sous vide de cette pâte. Cette méthode permet avantageusement d'éviter d'effectuer la poussée de ladite pâte avant sa mise en boîte.

Les pâtes destinées à être placées dans de telles boîtes comprennent en tant qu'agents levants des poudres chimiques encore appelées poudre levante ou levure chimique. Or il est connu que les pâtes à base de levure chimique ne présentent pas des propriétés organo-leptiques (goût, texture) totalement satisfaisantes. Le document EP 0 672 349 décrit un assemblage à valve comprenant une pâte à base de levure boulangère comprenant de l'éthanol.

Le problème posé par la présente invention était de préparer une pâte comprenant une levure boulangère et qui puisse être conditionnée dans un système fermé d'emballage, de préférence, dans une boîte.

Au sens de la présente description, le terme levure boulangère désigne un micro-organisme, ce terme est à opposer à « levure chimique ou poudre levante » qui font référence à des produits purement chimiques.

La présence de levure boulangère, sèche ou hydratée, dans des pâtes leur confère un arôme et une saveur particulière que le consommateur perçoit comme un produit de qualité.

Par levure "hydratée", on entend les levures du commerce. Par levure "sèche", on entend une levure déshydratée susceptible d'être transformée en levure "hydratée" lorsqu'on lui ajoute une quantité d'eau égale à deux fois son poids.

Les produits à base de pâte présentent généralement la particularité de devoir subir une étape dite de « poussée de la pâte » avant d'être placés dans leur emballage.

La poussée consiste généralement à placer la pâte à température ambiante pendant un temps donné de manière à permettre aux agents levants de réagir. Cette étape se caractérise par une expansion du volume de la pâte généralement comprise entre 1 à 15 % par rapport au volume initial de la pâte. Cette étape de poussée permet à une pâte qui a été conservée quelques jours voire quelques semaines de se développer pour donner un produit présentant la texture, la densité et la saveur des produits boulangers.

Le problème posé par les pâtes contenant des levures boulangères est que ladite levure continue généralement de se développer et de produire du dioxyde de carbone jusqu'à ce que la pâte soit cuite. Même à des températures de réfrigération, c'est-à-dire entre environ 0°C et environ 12°C de telles levures boulangères restent actives et continuent de produire du dioxyde de carbone. L'utilisation d'une telle levure requiert par conséquent de maîtriser la levée de la pâte à base de levure boulangère afin d'éviter toute rupture ou explosion de l'emballage dans lequel ladite pâte est placée. Il a été mis en évidence que l'activité d'une levure boulangère lorsqu'elle est contenue dans une pâte maintenue entre 0°C et 12°C est faible durant les premiers jours suivants la préparation de la pâte mais qu'elle intervient généralement à partir du septième jour (J+7) après la préparation.

Les fabricants de pâtes destinées à être conservées sous emballage ont logiquement été amenés à remplacer dans leurs produits les levures boulangères par des poudres levantes telles que le bicarbonate de soude et ses analogues. Les produits généralement utilisés sont une combinaison d'acide levant (acide citrique et glucono-delta-lactone (GDL)) et d'une base levante, par exemple le bicarbonate de soude.

Une judicieuse combinaison de ces agents levants permet de générer du dioxyde de carbone au sein de la pâte produisant ainsi une augmentation du volume de cette pâte. Le principal avantage de ces agents chimiques levants est que leur comportement est prévisible. En effet, il suffit de calculer les proportions de chacun des réactifs pour connaître le volume de dioxyde de carbone qui sera libéré.

Selon une variante, on peut aussi n'utiliser qu'un seul des composants de la levure chimique : le composant acide ou le composant basique, ce composant réagira alors avec un composé du milieu qui peut agir respectivement en tant que base ou en tant qu'acide.

Lorsque l'on utilise des poudres levantes pour préparer des produits à base de pâte, on observe que la production de dioxyde de carbone commence relativement tôt après la mise en boîte de la pâte et que cette production de dioxyde de carbone est constante (pendant toute la durée de la réaction chimique) puis cesse (lorsque l'agent en défaut a été entièrement consommé).

L'utilisation de telles levures chimiques permet de préparer une pâte qui présente une durée de vie satisfaisante pour un produit frais sans poser les problèmes liés à l'augmentation du volume interne de l'emballage rencontrés lorsque l'on utilise une levure boulangère. Néanmoins, l'utilisation de ces poudres levantes ne permet pas d'atteindre des propriétés organo-leptiques équivalentes à celles d'une pâte à base de levure boulangère.

Le problème posé par la présente invention était de fabriquer un produit de boulangerie de type petit pain, pain brioché, croissant, pain au chocolat, brioche, pâte à pizza qui contient de la levure boulangère et qui puisse être vendu dans un système fermé d'emballage et en particulier dans une boîte.

Or l'homme du métier en charge de la production de telles pâtes savait que le principal problème posé par les levures boulangères est qu'elles libèrent une quantité de gaz carbonique (CO₂) nettement supérieure à la quantité de CO₂ générée lorsqu'une poudre levante est utilisée, et que cette production de gaz a lieu pratiquement pendant toute la durée de conservation de ladite pâte. L'homme du métier savait par conséquent qu'il était difficile de conditionner un tel produit dans un système d'emballage fermé.

Les auteurs de la présente invention ont mis en évidence que l'utilisation d'une combinaison de levure boulangère, de levure chimique et d'alcool permet de préparer une pâte qui satisfait aux exigences imposées à la fois par la technologie choisie (système d'emballage fermé) et par le consommateur. En effet, cette pâte présente des qualités organo-leptiques comparables à celles d'une pâte préparée en utilisant une levure boulangère en tant que seul agent levant.

Par ailleurs, le développement de cette pâte dans un système d'emballage fermé tel qu'une boîte doit être tel que la boîte puisse être ouverte par le consommateur sans effort particulier : (c'est-à-dire une ouverture spontanée lorsque le consommateur déchire l'emballage) sans toutefois que ladite boîte n'explose spontanément au cours de sa conservation (chez le fabricant, sur son point de vente...) ou encore lors de son transport.

La présente invention concerne la combinaison d'une pâte et d'un système fermé d'emballage, ledit système fermé d'emballage permettant uniquement la sortie de gaz et la pâte comprenant, en tant que constituants essentiels, de la farine, de l'eau, de la levure chimique, de la levure boulangère sensible au froid (LSF), encore appelée « l.t.i. » pour « low température inactive », et de l'alcool, les constituants essentiels étant choisis dans des rapports tels que la pression interne de la boîte dans la période comprise entre J+3 et J+50 soit comprise entre environ 6 psi (41,4 kPa) et environ 30 psi (206,8 kPa) à une température comprise entre 0°C et 12°C.

Par « J+3 et J+50 » au sens de la présente invention, on entend respectivement 3 jours et 50 jours après la préparation du système « pâte + emballage » c'est à dire respectivement 3 jours et 50 jours après la préparation de la pâte et sa mise sous emballage.

Par levure « LSF » ou « l.t.i. » au sens de la présente invention, on entend toute levure boulangère « inactive à basse température » utilisable pour la préparation d'articles de boulangerie destinés à être cuits juste avant consommation, après avoir été conservés quelques jours aux températures de réfrigération. Ces levures boulangères présentent la propriété d'être pratiquement inactives aux températures usuelles de réfrigération c'est-à-dire aux températures comprises entre 0 et 12°C, de survivre à ces températures et de retrouver ensuite leur activité à des températures plus élevées en particulier dès 13 ou 14°C. Les levures LSF commercialisées par la société LESAFFRE conviennent par exemple pour préparer la pâte utilisée dans la présente invention.

La levure chimique utilisée dans la présente invention est de préférence choisie dans le groupe des levures chimiques classiques comprenant le bicarbonate de soude, le dihydrogéno-disodium-diphosphate (SAPP), le glucono-delta-lactone ou leurs mélanges. Le bicarbonate de soude peut encore être utilisé sous forme encapsulée. Le rôle de la levure chimique, dans la présente invention, est de permettre une levée de pâte lors des premiers jours de sa mise en boîte (rôle de « starter »). Ainsi, dès J+3, la pâte est plaquée contre la paroi de l'emballage, ceci permet une ouverture facile de l'emballage dès J+3, ceci permet en outre de chasser l'air résiduel contenu dans l'emballage, air qui aurait pour conséquence d'oxyder la pâte.

La pâte utilisée dans la présente invention est préparée de manière classique en mélangeant ses différents constituants puis en abaissant la pâte ainsi formée en bandeaux.

Le système d'emballage utilisé pour conserver la pâte avant sa consommation doit remplir les critères suivants : il doit permettre uniquement la sortie des gaz éventuellement libérés par la pâte et doit être imperméable à la sortie, ainsi qu'à l'entrée, de tout produit liquide, huileux, solide. En outre, l'ouverture de cet emballage doit pouvoir s'effectuer facilement, de même qu'il doit être aisé de sortir la pâte de son emballage sans l'endommager. Les matériaux utilisés pour former cet emballage doivent aussi être suffisamment résistants pour qu'une pression interne constante soit maintenue pendant toute la durée de la conservation du produit (chez le fabricant, sur son point de vente...) ou encore lors de son transport. Les matériaux classiquement utilisés sont des matériaux cartonnés éventuellement renforcés par tout agent connu pour augmenter la dureté de ce genre de matériaux, et/ou éventuellement recouverts par une feuille en un autre matériau : aluminium, polymère...

La boîte utilisée dans la présente invention est, de préférence, une boîte de forme cylindrique, de préférence la paroi cylindrique sera formée par enroulement d'une bande de matériau cartonné en forme de spirale, les parties supérieure et inférieure de ladite boîte seront formées par des disques sertis à la paroi cylindrique.

La partie cylindrique de cette boîte est de préférence fabriquée à partir d'une pièce en carton en forme de spirale, que l'on enroule sur elle-même pour former le corps cylindrique de la boîte et dont on lie bord à bord les pas au moyen d'une matière adhésive suffisamment résistante pour éviter la rupture de la boîte ainsi formée. L'adhésif utilisé pour joindre les pas de la pièce en forme de spirale doit cependant être en un matériau qui ne résiste pas à une pression exercée par un utilisateur qui a l'intention d'ouvrir la boîte. La paroi intérieure de la boîte cylindrique est de préférence recouverte d'un film en un polymère inerte, et, un film en aluminium peut être placé entre la paroi cartonnée et le film polymère. Tout polymère qui présente la propriété d'être inerte et non toxique vis-à-vis du produit pâteux avec lequel il sera en contact peut être utilisé.

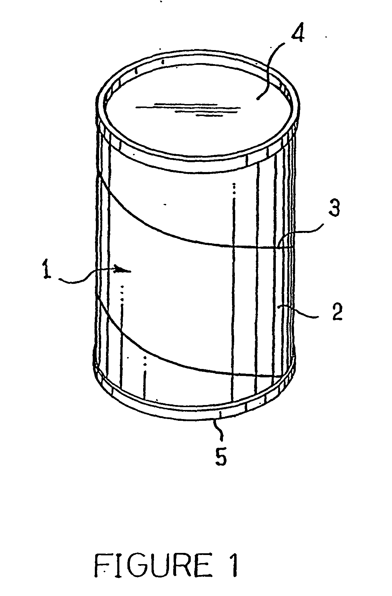

La figure 1 est une représentation schématique de la boîte utilisée dans la présente invention, la boîte (1) est obtenue par enroulement d'une bande en forme de spirale (2) dont les pas sont fixés bord à bord (3). Les parties supérieure (4) inférieure (5) de la boîte sont des disques sertis au corps cylindrique de la boîte.

La pâte utilisée dans la combinaison selon la présente invention contenant de la farine, de l'eau, de la levure chimique, de la levure boulangère L.S.F et de l'alcool présentera de préférence un pourcentage pondéral de levure chimique par rapport à la pâte compris entre 0,01 et 2,5 lorsqu'une levure chimique classique ou un mélange de levure classiques sont utilisées. Par "levure chimique classique" on entend une levure chimique non encapsulée. Lorsque le bicarbonate de soude sous forme encapsulée est utilisé en tant que levure chimique, il est nécessaire de prévoir une quantité de bicarbonate de soude comprise entre une et neuf fois la quantité prévue si l'on utilisait du bicarbonate de soude sous forme libre (classique). Généralement le bicarbonate de soude encapsulé est utilisé en quantité telle que le pourcentage pondéral de bicarbonate de soude encapsulé par rapport à la pâte est compris entre 0,30 et 0,60; à titre d'exemple on pourra utiliser du bicarbonate encapsulé CAP-SHURE® SB 140-70A commercialisé par la société BALCHEM CORPORATION.

De préférence, la levure boulangère LSF utilisée est de la levure sèche, de préférence, le pourcentage pondéral de la levure boulangère sèche LSF par rapport à la pâte est compris entre 0,08 et 0,2.

L'alcool utilisé pour préparer la pâte est de préférence l'éthanol. De manière avantageuse, le pourcentage pondéral d'éthanol par rapport à la pâte est compris entre 1,65 et 2.

La pâte utilisée selon la présente invention peut aussi bien être une pâte destinée à être transformée en un produit sucré qu'en un produit salé. Par conséquent la pâte pourra contenir au moins un agent choisi dans le groupe constitué par les sucres, les édulcorants, les agents de saveur, les agents permettant le maintien de la pâte cuite sous sa forme expansée, les matières grasses, les arômes, les conservateurs, les colorants, le sel, l'oeuf, le gluten.

Ainsi, la combinaison selon la présente invention est destinée aux pâtes pour la production de petit pain, pain brioché, croissant, pain au chocolat, brioche, pâte à pizza.

De façon avantageuse, la pâte utilisée dans la combinaison selon la présente invention comprend :
- 0,14 % poids de levure boulangère sèche,
- 0,06 % poids de bicarbonate de soude ou 0,51 % de bicarbonate de soude encapsulé, et 0,95 % de glucono-delta-lactone,
- de 1,70 à 1,90 % poids d'éthanol pur.

Les pâtes obtenues par la mise en oeuvre de la présente invention se conservent généralement pendant 50 jours. Afin de consommer un produit présentant des qualités organo-leptiques optimales, il est conseillé de le consommer sous 35 jours.

La présente invention concerne encore un procédé de préparation de la combinaison d'une pâte et d'une boîte qui comprend les étapes suivantes :
a) mélanger la farine, l'eau, la levure boulangère, la levure chimique et l'alcool ;
b) isoler une masse de la pâte obtenue ;
c) abaisser ladite pâte,
d) rouler ladite pâte pour former un cylindre ;
e) introduire ce cylindre dans la boîte et fermer ladite boîte ;
f) laisser la pâte reposer à une température comprise entre environ 20°C et environ 30°C pendant 3 à 10 heures de façon à permettre la poussée de ladite pâte ;
g) refroidir la pâte à environ 2°C pendant 3 jours.

On peut aussi prévoir d'ajouter à l'étape a) d'autres ingrédients tels que des sucres, des édulcorants, des agents de saveur, des agents permettant le maintien de la pâte cuite sous sa forme expansée, des matières grasses, des arômes, des conservateurs, des colorants, du sel, de l'oeuf, du gluten.

La présente invention a également pour objet les variantes de ce procédé qui comprennent en outre au moins une étape supplémentaire connue de l'homme du métier telle qu'une étape de feuilletage de la pâte mise en oeuvre en intercalant plusieurs couches de pâte avec plusieurs couches de matière grasse.

Les exemples qui suivent illustrent l'invention sans en limiter la portée.

Chacun des produits des exemples 1 à 8 a été préparé selon le mode opératoire suivant :

1000 g de pâte ont été obtenus en mélangeant, dans un pétrin à mixers commercialisé par la société Hobart, les ingrédients présentés dans les exemples 1 à 8.

240 g de la pâte ainsi obtenue ont ensuite été abaissés puis roulés pour former un cylindre que l'on a introduit dans une boîte cylindrique .

Les combinaisons "boîte + pâte" ont été entreposées pendant une nuit à température ambiante (20 °C) afin de permettre la poussée de ladite pâte.

La pression à l'intérieur de la boîte a été mesurée un jour après la mise en boîte de la pâte (J + 1), puis les combinaisons « boîte + pâte » ont été stockées pendant 14 jours à 9°C.

Les pressions à l'intérieur des boîtes composites ont été mesurées à J+1 et à J+14. Cette mesure de la pression a été effectuée en comparant, au moyen d'une jauge de contrainte, la pression exercée sur la partie supérieure des boîtes étudiées à J+1 puis à J+14 à la pression exercée sur la partie supérieure d'une boîte vide.

### Exemple 1

1000 g de pâte ont été préparés à partir d'eau, de farine (400 g) de levure LSF sèche (1,4 g) et de bicarbonate de soude (2,5 g) en tant que composant de levure chimique.

### Exemple 2

Une pâte a été préparée conformément à celle présentée dans l'exemple 1 en utilisant en tant que levure chimique un mélange de bicarbonate de soude (2,5 g) et de SAPP (3,5 g).

### Exemple 3

Une pâte a été préparée conformément à celle présentée dans l'exemple 1 en utilisant en tant que composant de levure chimique du glucono-delta-lactone (6,8 g).

### Exemple 4

Une pâte a été préparée conformément à celle présentée dans l'exemple 1 en utilisant en tant que levure chimique un mélange de bicarbonate de soude (10 g) et de SAPP (14 g).

### Exemple 5

Une pâte a été préparée conformément à celle présentée dans l'exemple 1 en utilisant en tant que levure chimique un mélange de bicarbonate de soude (0,4 g) et de SAPP (0,6 g).

### Exemple 6

Une pâte a été préparée conformément à celle présentée dans l'exemple 1 en utilisant en tant que composant de levure chimique du bicarbonate de soude (0,4 g).

### Exemple 7

Une pâte a été préparée conformément à celle présentée dans l'exemple 1 en utilisant en tant que levure chimique un mélange de bicarbonate de soude (0,4 g) et de glucono-delta-lactone (6,8 g).

### Exemple 8

Une pâte a été préparée conformément à celle présentée dans l'exemple 1 en utilisant en tant que levure chimique un mélange de bicarbonate de soude encapsulé (5 g) et de glucono-delta-lactone (9,3 g).

Les résultats des pressions des boîtes à J+1 et à J+14 sont consignés dans le tableau I.

**Tableau 1**

| **Exemple** | **Pression à J+1** | **Pression à J+14** |
|---|---|---|
| 1 | 2,19 psi | 13,64 psi |
| 2 | 2,03 psi | 16,89 psi |
| 3 | 2,45 psi | 11, 71 psi |
| 4 | 13,64 psi | 23,80 psi |
| 5 | 2,67 psi | 19,04 psi |
| 6 | 0 psi | 4,82 psi |
| 7 | 5,72 psi | 13,67 psi |
| 8 | 5,12 psi | 18,57 psi |

A partir de ce tableau, il a pu être établi que certaines boîtes présentaient une pression interne trop faible, c'est le cas par exemple de la boîte de l'exemple 6. A l'opposé, la pression interne de la boîte 4 s'est révélée être trop élevée, les risques d'explosion de cette boîte avant 40 jours ont été jugés trop élevés.

Les résultats obtenus avec les boîtes 1, 2, 3 et 5 se sont avérés assez bons quoique la pression à (J+1) soit relativement basse.

En conséquence, il a été décidé de retenir les boîtes des exemples 7 et 8 au motif que l'évolution de la pression interne était conforme à celle attendue. Et pour le cas où la pression à l'intérieur d'une de ces boîtes devenait être trop élevée, l'utilisation d'un inhibiteur de la levure LSF comme par exemple un alcool pouvait encore être envisagée pour maîtriser l'augmentation de la pression à l'intérieur de la boîte.

Les exemples 7 et 8 ont été repris en ajoutant de l'éthanol dans les proportions pondérales suivantes par rapport à la pâte :1,63 ; 1,72 ;1,91 et 2,1.

Il a ainsi été mis en évidence que si le pourcentage d'éthanol utilisé était inférieur à 1,70, la boîte explosait avant 40 jours, par contre l'utilisation d'éthanol en un pourcentage pondéral supérieur à 1,90 conduisait à inhiber la levure.

Une étude complémentaire a été mise en oeuvre afin de comparer l'« acceptabilité », par un panel de consommateurs, du produit pâteux cuit avec un produit comparatif à base de levure chimique sans levure boulangère.

Il ressort de cette étude comparative qu'une pâte conditionnée en boîte composite conformément à la présente invention est significativement plus apprécié qu'un produit comparatif à base de levure chimique (sans levure boulangère) conditionné en boîte composite, cette comparaison étant effectuée sur des pâtes cuites.

A partir de ces essais, 4 types de croissants ont été fabriqués. Les ingrédients des exemples 9 à 12 ont été successivement mélangés dans un mixer industriel.

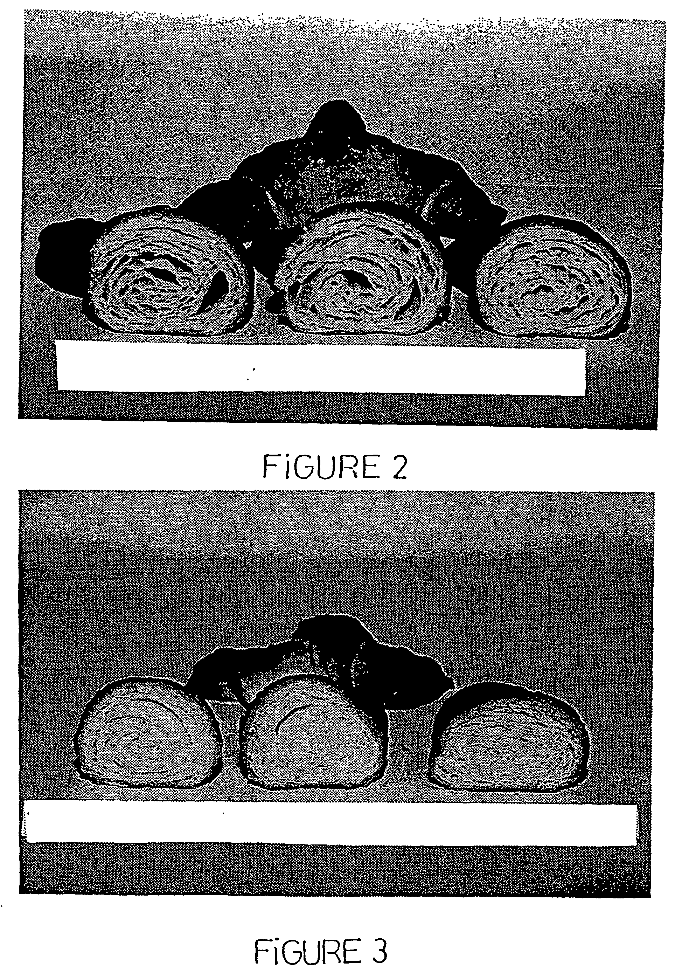

### Exemple 9 (figure 2)

| | |
|---|---|
| Farine | 250 kg |
| Gluten | 20 kg |
| Sucre | 18,75 kg |
| Dextrose | 6,25 kg |
| Acide ascorbique | 0,025 kg |
| Eau | 162,00 kg |
| Alcool 95% | 12,50 kg |
| Soda * encapsulé CAPSHURE ® SB 140-70A | 3,13 kg |
| G.D.L | 5,85 kg |
| Levure L.S.F. sèche | 0,875 kg |
| Sel | 5,00 kg |
| Emulsifiant | 0,88 kg |
| Arôme levain | 3,75 kg |
| **Total avant feuilletage** | 489,01 kg |
| Beurre anhydre (feuilletage) | 139,75 kg |
| **Total** | 628,76 kg |
| Par « soda », on entend « bicarbonate de soude » | |

### Exemple 10 (figure 3)

| | |
|---|---|
| Farine | 250 kg |
| Gluten | 20 kg |
| Sucre | 12,50 kg |
| Dextrose | 13,75 kg |
| Babeurre | 1,25 kg |
| Acide ascorbique | 0,025 kg |
| Eau | 177,50 kg |
| Alcool 95% | 7, 50 kg |
| Soda standard | 6,50 kg |
| SAPP | 9,20 kg |
| Sel | 3,80 kg |
| **Total avant feuilletage** | 502,025 kg |
| Beurre anhydre (feuilletage) | 139,75 kg |
| Total | 641,775 kg |

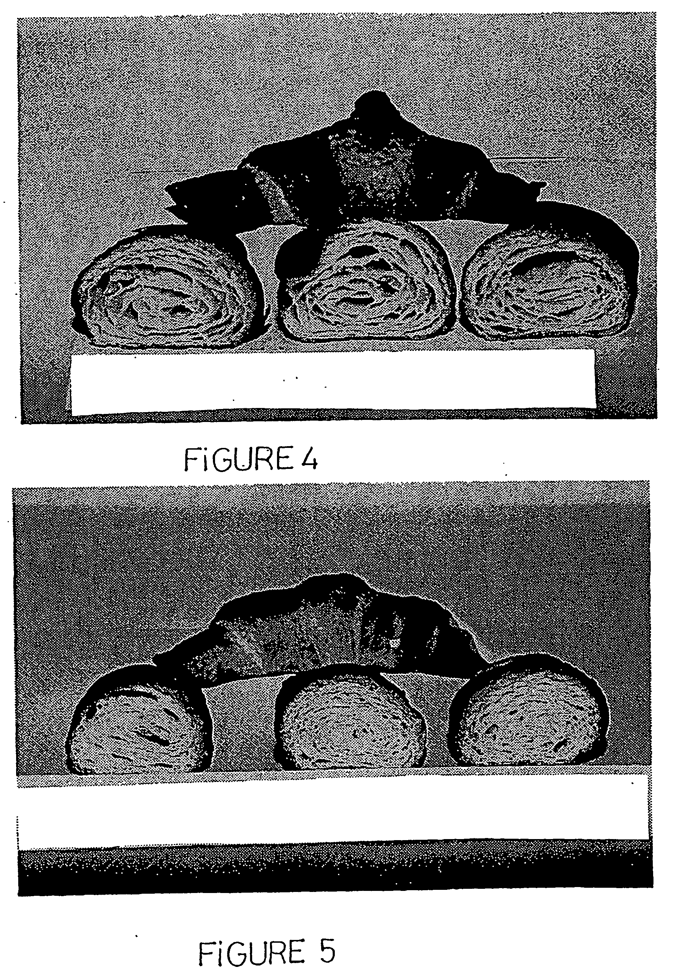

### Exemple 11 (figure 4)

| | |
|---|---|
| Farine | 250 kg |
| Gluten | 20 kg |
| Sucre | 18,75 kg |
| Dextrose | 6,25 kg |
| Acide ascorbique | 0,025 kg |
| Eau | 162,00 kg |
| Alcool 95% | 12,50 kg |
| Soda encapsulé CAPSHURE ® SB 140-70A | 3,13 kg |
| G.D.L | 5,85 kg |
| Levure L.S.F. sèche | 0,875 kg |
| Sel | 5, 00 kg |
| Emusilfiant | 0,88 kg |
| Arôme levain | 3,75 kg |
| Total avant feuilletage | 489,01 kg |
| Matière grasse végétale anhydre (feuilletage) | 139,75 kg |
| Total | 628,76 kg |

### Exemple 12 (figure 5)

| | |
|---|---|
| Farine | 250 kg |
| Gluten | 20 kg |
| Sucre | 7,50 kg |
| Dextrose | 12,50 kg |
| Acide ascorbique | 0,025 kg |
| Eau | 177,50 kg |
| Alcool 95% | 5,00 kg |
| Soda standard | 6,50 kg |
| SAPP | 9,20 kg |
| Sel | 2,05 kg |
| **Total avant feuilletage** | 490,275 kg |
| Margarine feuilletage | 139,75 kg |
| Total | 630,025 kg |

Les pâtes ainsi obtenues ont été extrudées pour obtenir une bande continue qui est ensuite découpée en 2 parties entre lesquelles a été déposée en continu la matière grasse : beurre anhydre pour les exemples 9 et 10, matière grasse végétale pour l'exemple 11 et margarine pour l'exemple 12. Cet ensemble « pâte-matière grasse-pâte » est abaissé par passages successifs dans une série de laminoirs, puis repliés pour former un pâton plus épais. Cette opération est répétée 2 à 3 fois pour obtenir finalement une abaisse de pâte dite feuilletée de 3 à 4 millimètres d'épaisseur contenant entre 20 et 30 couches de matière grasse.

La pâte est ensuite découpée en bandelettes, elles-mêmes prédécoupées en triangles, ces bandelettes sont roulées pour former un boudin de pâte qui sera introduit dans la boîte composite.

Les boîtes sont ensuite capsulées puis mises en chambre de pousse (25°C) pendant 10 heures, cette étape permet la levée de la pâte (évacuation de l'air résiduel dans les boîtes).

Les produits sont ensuite stockés en chambre froide pendant 3 jours.

Les croissants représentés sur les figures 2 à 5 sont respectivement obtenus en mélangeant les ingrédients des exemples 9 à 12.

Ces figures illustrent que les croissants contenant de la levure boulangère (LSF) + levure chimique présentent une texture moins compacte que ceux qui contiennent exclusivement de la levure chimique. En outre, les croissants contenant de la levure L.S.F + levure chimique sont plus appréciés que les croissants contenant exclusivement de la levure chimique qui eux présentent un goût nettement plus salin.

Des combinaisons « pâte à brioche + boîte composite » selon l'invention ont aussi été réalisées.

Dans les exemples 13 et 14 les ingrédients en vue de la préparation respectivement d'une brioche au beurre et d'une brioche ordinaire (contenant de la matière grasse végétale anhydre) sont présentés.

Les pâtes ainsi obtenues sont soit mises en boule, soit extrudées pour obtenir une bande continue qui est ensuite découpée en 2 parties qui sont superposées, abaissées par passage successifs dans une série de laminoirs, et finalement repliées pour former un pâton plus épais.

Cette opération est répétée 2 fois pour obtenir une bande de pâte régulière dans laquelle sont découpés des ronds de pâte d'un diamètre légèrement inférieur à celui de la boîte composite dans laquelle ils seront stockés. Un nombre défini d'unité de ronds de pâte est ensuite superposé dans la boîte composite.

Les boîtes sont ensuite capsulées puis mises en « chambre de pousse » (25°C) pendant 10 heures, cette étape permet la levée de la pâte (évacuation de l'air résiduel dans la boîte).

Les produits sont ensuite stockés en chambre froide.

### Exemple 13

| | |
|---|---|
| Farine | 250,00 |
| Gluten | 10,00 |
| Sucre | 25,00 |
| Eau | 112,50 |
| Beurre Anhydre | 52,50 |
| OEuf | 50,00 |
| Alcool 95% | 10,80 |
| Levure LSF sèche | 0,760 |
| Sel | 6,25 |
| Soda encapsulé CAPSHURE ® SB 140-70A | 1,95 |
| G. D. L | 3,70 |
| Dextrose | 17,50 |
| Total (kg) | 540,96 |

### Exemple 14

| | |
|---|---|
| Farine | 250,00 |
| Gluten | 10,00 |
| Sucre | 25,00 |
| Eau | 112,50 |
| Matière grasse végétale anhydre | 52,50 |
| OEuf | 50,00 |
| Alcool 95% | 10,80 |
| Levure LSF sèche | 0,760 |
| Sel | 6,25 |
| Soda encapsulé CAPSHURE ® SB 140-70A | 1,95 |
| G.D.L | 3,70 |
| Dextrose | 17,50 |
| **Total (kg)** | **540,96** |

## Revendications

1. Combinaison d'une pâte et d'un système fermé d'emballage, ledit système fermé d'emballage permettant uniquement la sortie de gaz et la pâte comprenant, en tant que constituants essentiels, de la farine, de l'eau, de la levure chimique, de la levure boulangère LSF et de l'alcool, **caractérisée en ce que** les constituants essentiels sont choisis dans des rapports tels que la pression interne de la boîte dans la période comprise entre J+3 et J+50 soit comprise entre environ 6 psi (41,4 kPa) et environ 30 psi (206,8 kPa) à une température comprise entre 0°C et 12°C.

2. Combinaison selon la revendication 1 telle que la pâte comprend de la levure chimique choisie dans le groupe comprenant le bicarbonate de soude, le dihydrogéno-disodium diphosphate (SAPP), le glucono-delta-lactone ou leurs mélanges.

3. Combinaison selon la revendication précédente telle que le pourcentage pondéral de la levure chimique par rapport à la pâte est compris entre 0,01 et 2,5, lorsqu'une levure chimique classique ou un mélange de levures chimiques classiques sont utilisées.

4. Combinaison selon la revendication 1 telle que la levure chimique utilisée est du bicarbonate de soude encapsulé, le pourcentage pondéral de bicarbonate de soude encapsulé par rapport à la pâte est compris entre 0,30 et 0,60.

5. Combinaison selon l'une des revendications précédentes telle que la levure boulangère LSF utilisée est de la levure sèche, le pourcentage pondéral de la levure boulangère LSF sèche par rapport à la pâte est compris entre 0,08 et 0,2.

6. Combinaison selon l'une des revendications précédentes telle que l'alcool utilisé est l'éthanol dans un pourcentage pondéral par rapport à la pâte compris entre 1,65 et 2.

7. Combinaison selon l'une des revendications précédentes telle que la pâte contient au moins un agent choisi dans le groupe constitué par les sucres, les édulcorants, les agents de saveur, les agents permettant le maintien de la pâte cuite sous sa forme expansée, les matières grasses, les arômes, les conservateurs, les colorants, le sel, l'oeuf, le gluten.

8. Combinaison selon l'une des revendications précédentes telle que la pâte comprend :
- 0,14 % poids de levure boulangère sèche,
- 0,06 % poids de bicarbonate de soude ou 0,51 % de bicarbonate de soude encapsulé et 0,95 % de glucono-delta-lactone,
- de 1,70 à 1,90 % poids d'éthanol pur.

9. Combinaison selon l'une des revendications précédentes telle que la pâte est une pâte à petit pain, pain brioché, croissant, pain au chocolat, brioche, pâte à pizza.

10. Procédé de préparation de la combinaison d'une pâte et d'une boîte **caractérisé en ce qu'**il comprend les étapes suivantes :
a) mélanger la farine, l'eau, la levure boulangère, la levure chimique et l'alcool ;
b) isoler une masse de pâte obtenue ;
c) abaisser ladite pâte;
d) rouler ladite pâte pour former un cylindre ;
e) introduire ce cylindre dans la boîte et fermer ladite boîte ;
f) laisser la pâte reposer à une température comprise entre environ 20°C et environ 30°C pendant 3 à 10 heures de façon à permettre la poussée de ladite pâte ;
g) refroidir la pâte à environ 2°C pendant 3 jours.

## Patentansprüche

1. Kombination aus einem Teig und einem geschlossenen Verpackungssystem, wobei das geschlossene Verpackungssystem nur das Austreten von Gas zuläßt und der Teig als essentielle Bestandteile Mehl, Wasser, Backpulver, kälteempfindliche Bäckerhefe (Bäckerhefe LSF) und Alkohol umfaßt, **dadurch gekennzeichnet, daß** die essentiellen Bestandteile in derartigen Anteilen gewählt werden, daß der Druck im Inneren des Behältnisses im Zeitraum zwischen T+3 und T+50 zwischen etwa 6 psi (41,4 kPa) und etwa 30 psi (206,8 kPa) bei einer Temperatur zwischen 0°C und 12°C liegt.

2. Kombination nach Anspruch 1, wobei der Teig Backpulver umfaßt, das aus Natronbicarbonat, Dinatriumdihydrogendiphosphat (SAPP), Glucon-delta-lacton oder deren Gemischen ausgewählt ist.

3. Kombination nach dem vorhergehenden Anspruch, wobei der Gewichtsprozentsatz des Backpulvers, bezogen auf den Teig, zwischen 0,01 und 2,5 liegt, wenn herkömmliches Backpulver oder ein Gemisch herkömmlicher Backpulver verwendet wird.

4. Kombination nach Anspruch 1, wobei das verwendete Backpulver verkapseltes Natronbicarbonat ist, wobei der Gewichtsprozentsatz an verkapseltem Natronbicarbonat, bezogen auf den Teig, zwischen 0,30 und 0,60 liegt.

5. Kombination nach einem der vorhergehenden Ansprüche, wobei die verwendete Bäckerhefe LSF Trocken-Bäckerhefe ist, wobei der Gewichtsprozentsatz an Trocken-Bäckerhefe LSF, bezogen auf den Teig, zwischen 0,08 und 0,2 liegt.

6. Kombination nach einem der vorhergehenden Ansprüche, wobei der verwendete Alkohol Ethanol in einem Gewichtsprozentsatz, bezogen auf den Teig, zwischen 1,65 und 2 ist.

7. Kombination nach einem der vorhergehenden Ansprüche, wobei der Teig mindestens ein Mittel enthält, das aus Zuckern, Süßungsmitteln, Geschmacksstoffen, Mitteln, die erlauben, daß der gebackene Teig seine expandierte Form beibehält, Fett, Aromastoffen, Konservierungsmitteln, Farbstoffen, Salz, Ei, Gluten ausgewählt ist.

8. Kombination nach einem der vorhergehenden Ansprüche, wobei der Teig umfaßt:
- 0,14 Gew.-% Trocken-Bäckerhefe,
- 0,06 Gew.-% Natronbicarbonat oder 0,51 Gew.-% verkapseltes Natronbicarbonat und 0,95% Glucon-delta-lacton,
- 1,70 bis 1,90 Gew.-% reines Ethanol.

9. Kombination nach einem der vorhergehenden Ansprüche, wobei der Teig ein Teig für Brötchen, Hefebrot, Croissants, Schokoladenbrot, Brioches, Pizzateig ist.

10. Verfahren zur Herstellung der Kombination aus einem Teig und einem Behältnis, **dadurch gekennzeichnet, daß** es die folgenden Schritte umfaßt:
a) Mischen von Mehl, Wasser, Bäckerhefe, Backpulver und Alkohol;
b) Separieren einer erhaltenen Teigmasse;
c) Glätten des Teiges;
d) Rollen des Teiges, um einen Zylinder zu erhalten;
e) Einbringen des Zylinders in das Behältnis und Verschließen des Behältnisses;
f) Ruhenlassen des Teiges bei einer Temperatur zwischen etwa 20°C und etwa 30°C über einen Zeitraum von 3 bis 10 Stunden, um das Gehen des Teiges zu erlauben;
g) Abkühlen des Teiges auf etwa 2°C über einen Zeitraum von 3 Stunden.

## Claims

1. Combination of a dough and a closed wrapping system, said closed wrapping system exclusively allowing the exit of gases and the dough comprising, as essential constituents, flour, water, chemical raising agent, LTI. baker's yeast and alcohol, **characterized in that** the essential constituents are chosen in ratios such that the internal pressure of the box in the period between D+3 and D+50 is between about 6 psi (41.4 kPa) and about 30 psi (206.8 kPa) at a temperature of between 0°C and 12°C.

2. Combination according to Claim 1, such that the dough comprises chemical raising agent chosen from the group comprising bicarbonate of soda, disodium dihydrogen diphosphate (SAPP), glucono-delta-lactone and mixtures thereof.

3. Combination according to the preceding claim, such that the weight percentage of the chemical raising agent relative to the dough is between 0.01 and 2.5, when a conventional chemical raising agent or a mixture of conventional chemical raising agents are used.

4. Combination according to Claim 1, such that the chemical raising agent used is encapsulated bicarbonate of soda and the weight percentage of encapsulated bicarbonate of soda relative to the dough is between 0.30 and 0.60.

5. Combination according to one of the preceding claims, such that the LTI. baker's yeast employed is dry yeast, the weight percentage of the dry LTI. baker's yeast relative to the dough is between 0.08 and 0.2.

6. Combination according to one of the preceding claims, such that the alcohol used is ethanol, in a weight percentage relative to the dough of between 1.65 and 2.

7. Combination according to one of the preceding claims, such that the dough contains at least one agent chosen from the group consisting of sugars, sweeteners, flavour enhancers, agents for maintaining the cooked dough in its expanded form, fats, flavourings, preserving agents, colouring agents, salt, egg and gluten.

8. Combination according to one of the preceding claims, such that the dough comprises:
- 0.14% by weight of dry baker's yeast,
- 0.06% by weight of bicarbonate of soda or 0.51% of encapsulated bicarbonate of soda and 0.95% of glucono-delta-lactone,
- from 1.70 to 1.90% by weight of pure ethanol.

9. Combination according to one of the preceding claims such that the dough is a dough for bread rolls, brioche loaves, croissants, pains au chocolat, brioches or pizza dough.

10. Process for preparing a combination of a dough and a box, **characterized in that** it comprises the following steps:
a) mixing together the flour, water, baker's yeast, chemical raising agent and alcohol;
b) isolating a mass of dough obtained;
c) rolling out said dough;
d) rolling up said dough to form a cylinder;
e) introducing this cylinder into the box and closing said box;
f) leaving the dough to stand at a temperature of between about 20°C and about 30°C for 3 to 10 hours so as to allow said dough to prove;
g) cooling the dough to about 2°C for 3 days.
